# EUROPEAN PATENT APPLICATION

(11) **EP 1 518 786 A1**
(43) Date of publication of application: **30.03.2005**
(21) Application number: 03021714.5
(22) Date of filing: 25.09.2003
(51) Int. Cl.: B62L 1/14

(54) **Bicycle brake**

(71) Applicant: Soglia, Giorgio, 48018 Faenza (Ravenna) (IT)
(72) Inventor: Soglia, Giorgio, 48018 Faenza (Ravenna) (IT)
(74) Representative: Paolini, Elena

(57) **Abstract**

The bicycle brake consists of two lever arms (1) with a hole (1A) in where passes a brake cable (2) blocked by its cilyndrical end while its free end passes inside a synthetic material ferrule (3) and then it is fixed to the outside brake operating devices. Said lever arms (1) have a hole (1B) in central position that permits to couple the brake shoe (4) to the lever arm (1). Then, the lever arm (1) is shaped with a bending (1C) having the same profile of the fork wheras in the lower part it has a shaped recess (1D) for the housing of the U-shaped spring (5) between the lever arm (1) and a slide (6) kept in suitable position by fixing element (7). The slide (6) has a blind hole (6A) to house the final part of the fixing element (7) and it has in its outside part a hollow (6B) for placing the lower pin (1E) of the lever arm (1) so permitting the rotation and by means of the U-shaped spring (5) to place the lever arm in beating with the inside part of the fork.

## Description

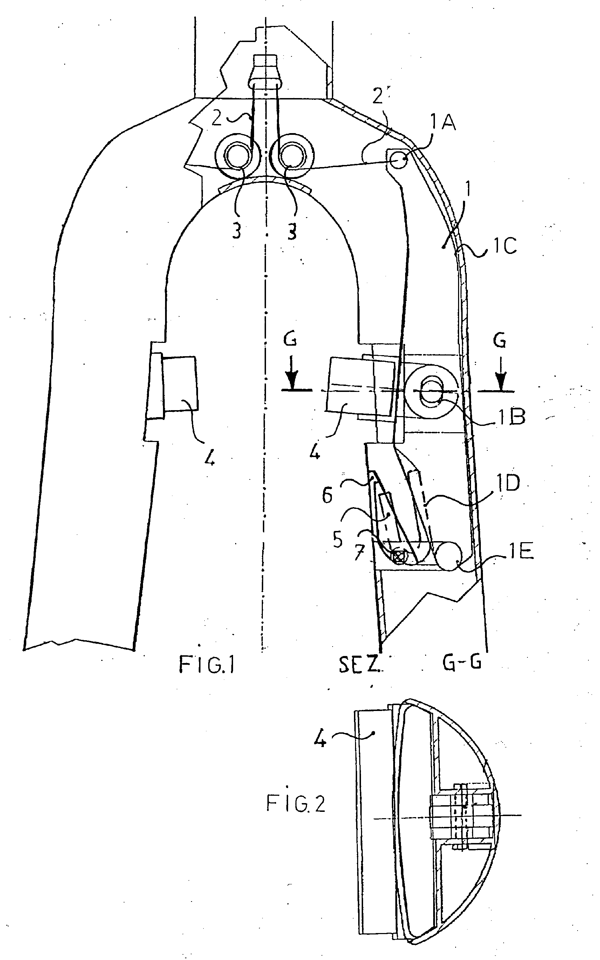

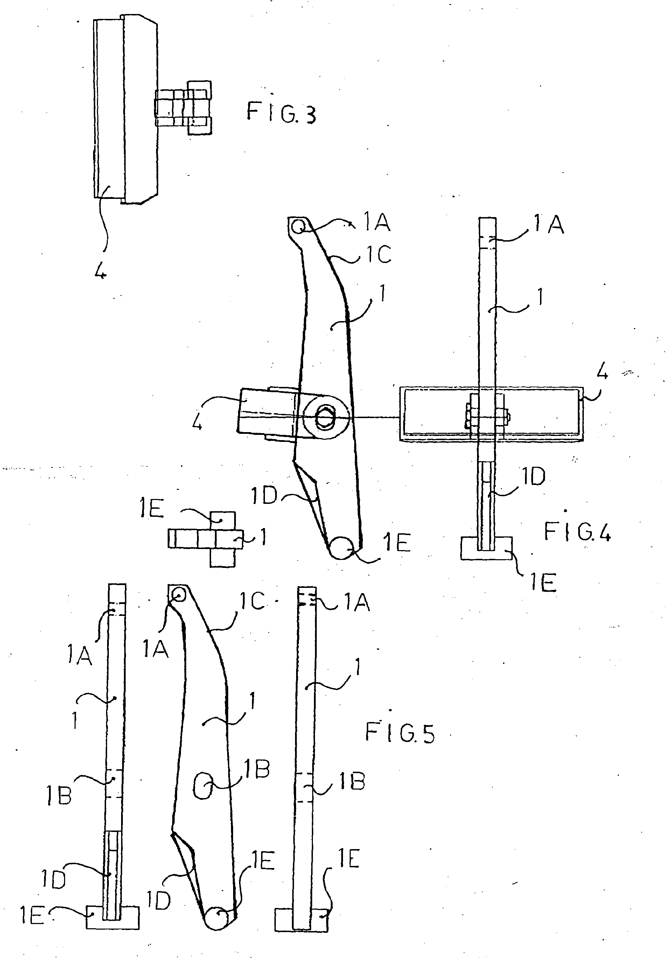

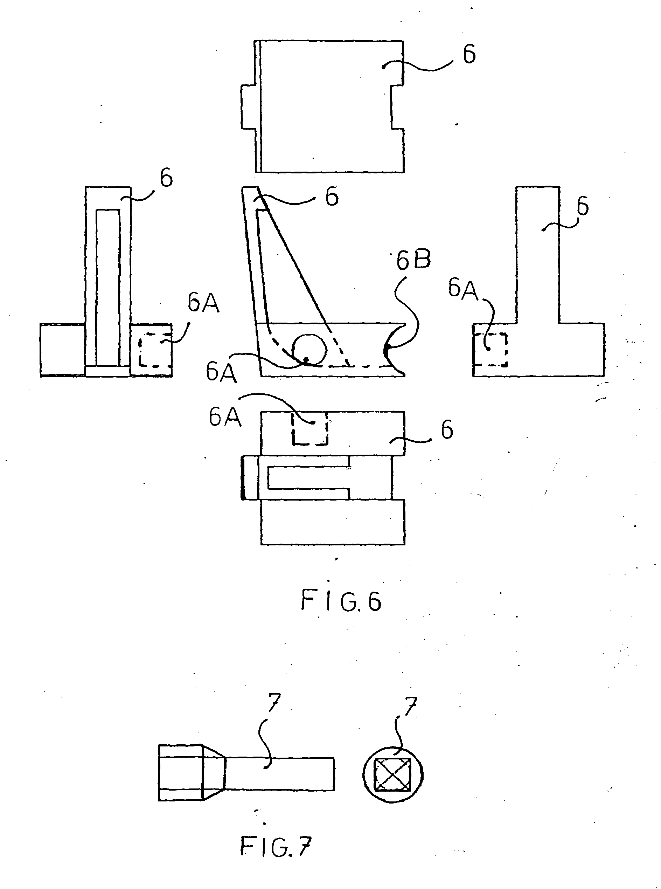

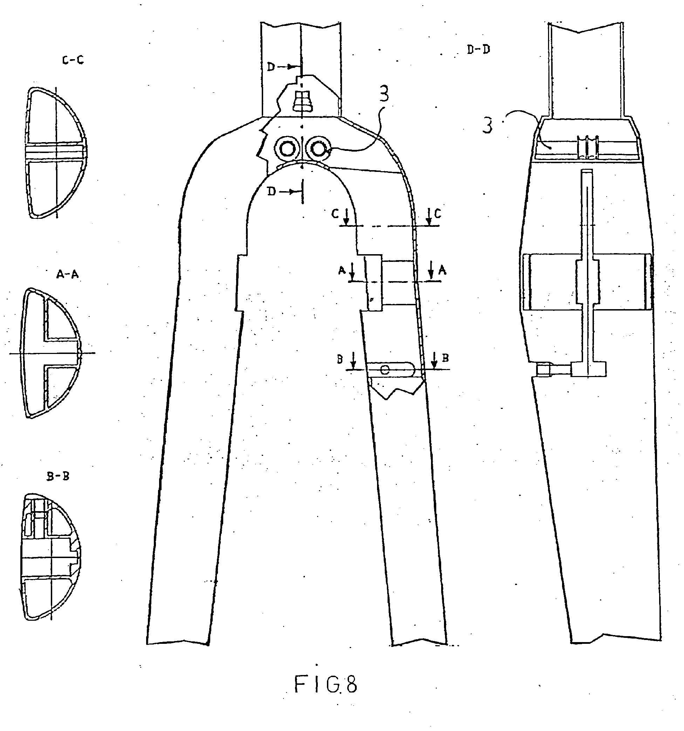

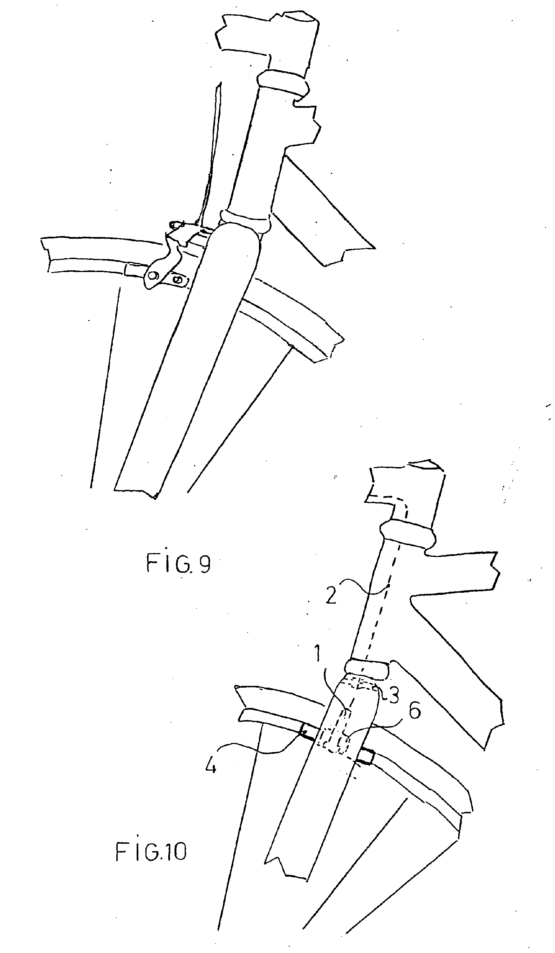

It is known that the bicycle provides brake. devices mounted onto the frame and attached onto the front fork and onto the back fork of the same bicycle. Said brake devices consist of sets of levers that are rotatably supported by a pivot attached to the mounting frame, i.e. for the front brake the front fork and for the back brake the back fork. In the common prior art the brake device provides the aforesaid pivot, consisting of a particular screw and nut to couple the brake device to the front and back forks, so it forms the component around which the levers make to move, by the brake cables and the rigid levers, the brake shoes together against rim of the bicycle wheel so creating the brake action for friction. Moreover, for a less stress onto the braking components is provided an arm that moves the lever rotating center so that, having a longer arm, the braking is easy. The currently available bicycle brake devices then have a small piston rod that regulates the relative rotation between the two arms with a screw joint to regulate the device. The common brake devices, moreover, provide a bolt with washer to hinge the small piston rod to the lever, a bolt with washer to fix the brake cable and two screws with washers to fix the brake shoes. Then it is present a spring for the closing and the opening of the brake shoes, so to have or not friction onto rim of the bicycle wheel, with a nut and a washer for fixing the same spring and in closing a metallic washer. So all the common brake device consists of normally about at least twentyone components that must be manufactured and mounted with big manufacturing and mounting costs. Foundamental feature of the invented brake device is the number of components which form it, only fourteen of which seven components placed on one side and the other seven components simmetrically placed on the other side. Other foundamental feature of the invented brake is to be integrated, i.e. the brake device is placed inside the fork, modified for this solution or with a partial integration, so to have an easier mounting, with borders and openings suitable both for the action than for the mounting. The invented bicycle brake, having a less number of components in comparison with the known brake, determines a lot of advantages: a) it has a less weight such as it consists of a less number of components; b) it is more easy to manufacture so determing a better economy with an advantage for the industrial production. Moreover, the invented brake device, being placed inside the fork, has a better stream-lined efficiency in comparison with the common brake with the different components placed outwardly. The afore said feature particular important for the professional bicyels where a stream-lined frame is essential element. Moreover, being the different components of the brake device placed inside the forks, a better structural stability is obtained and also a less risk of breaking. The invented brake device provides two lever arms 1 with holes 1A in their upper part in where passes the brake cable 2 blocked by its cilyndric end that determines the keeping in suitable position. The aforesaid brake cable 2, inserted inside the hole with its free end, then passes inside a synthetic material ferrule 3 with a low superficial stress and then the end is fixed to the outside brake operating devices. The lever arm 1 then has a second hole 1B in central position that permits to couple the brake shoe 4 to the said lever arm 1. To permit the housing inside the fork, the aforesaid lever arm is shaped with a bending 1C having the same profile of the fork. In the lower part the lever arm 1 has a shaped recess 1D for the housing of the U-shaped spring 5 between the lever arm 1 and a slide 6 beated mounted inside the fork and kept in suitable position by fixing element 7. Said fixing element 7 consists of a screw with squared groove head passing inside the screwed hole of the fork. The slide 6 is housed and fixed by means fo the fixing element 7 and it has a blind hole 6A to house the final part of the groove head. The same slide 6 has in its outside part a hollow 6B for placing the lower pin 1E of the lever arm 1 so permitting the rotation and, contemporary, by means of the U-shaped spring 5 to placed the lever arm in beating with the inside part of the fork. When the brake device is mounted but the rider does not operate the brake operating device, the brake device is opened, i.e. by means of the U-shaped spring 5 it is placed in the outside part of the fork. When the rider operates the brake operating device, the brake cable 2 is pulled, which in turn moves the lever arm 1 around the pin 1E. Comprising the U-shaped spring, the lever arm is moved to the inside of the fork so that the brake shoe 4 is moved against the rim of the bicycle wheel acting the braking action. It will be apparent to those skilled in the art from this mechanical disclosure that the present invention can be used for hydraulic solution or mechanical-hydraulic solution where pliers, piston and surge tank are placed inside the fork created in suitable form. The invented brake device and the known brake devices are illustrated in the annexed drawings of sheets 1, 2, 3, 4 and 5 where advantages and salient features of the present invention will become apparent to those silled in the art. In sheet 1 figure 1 is a view of a suitable fork with a part in frontal view and the other part in section view to show the lever arm 1 not operating. Figure 2 is a G-G sectional view to show the brake shoe 4 coupled with the lever arm 1. In sheet 2 figure 3 is top view of the brake shoe 4. Figure 4 are front and side views of the lever arm 1 with the brake shoe 4. Figure 5 are top, side, front and back views of the arm 1. In sheet 3 figure 6 are different views of the slide 6. Figure 7 are side and top views of the fixing element 7. In sheet 4 figure 8 are front view and A-A, B-B, C-C and D-D sectional views of the fork in a preferred embodiment of the present invention. In sheet 5 figure 9 is view of a common brake strucutre mounted onto the front fork. Figure 10 is view of a brake structure of the present invention mounted onto a suitable fork.

## Claims

1. Bicycle brake consists of two lever arms (1); **characterized in that**
- each lever arm (1) has a hole (1A) in where passes a brake cable (2) blocked by its cilyndrical end while its free end passes inside a synthetic material ferrule (3) and then it is fixed to the outside brake operating devices; and that
- each lever arm (1) has a hole (1B) in central position that permit to couple the brake shoe (4) to the lever arm (1); and that
- to permit the housing inside the fork, the lever arm (1) is shaped with a bending (1C) having the same profile of the fork whereas in the lower part it has a shaped recess (1D) for the housing of the U-shaped spring (5) between the lever arm (1) and a slide (6) kept in suitable position by fixing element (7); and that
- the slide (6) has a blind hole (6A) to house the final part of the fixing element (7) and it has in its outside part a hollow (6B) for placing the lower pin (1E) of the lever arm (1) so permitting the rotation and by means of the U-shaped spring (5) to place the lever arm in beating with the inside part of the fork.

2. Bicycle brake, as per claim 1, **characterized in that** when the brake device is mounted but the rider does not operate the brake operating device, the brake device by means of the U-shaped spring (5) is opened and it is placed in the outside part of the fork; when the rider operates the brake operating device, the brake cable (2) is pulled, which in turn moves the lever arm (1) around the pind (1E) and, comprising the U-shaped spring, the lever arm is moved to the inside of the fork so that the brake shoe (4) is moved against the rim of the bicycle wheel acting the braking action.

3. Bicycle brake, as per claim 1, **characterized in that** the it comprises fourteen components of which seven ones placed on one side and the other seven ones simmetrically placed on the other side.

4. Bicycle brake, as per claim 1, **characterized in that** it is housed inside a modified fork or onto a fork with a partial integration so to have an easy mounting.
